# EUROPEAN PATENT SPECIFICATION

(11) **EP 2 744 216 B1**
(45) Date of publication and mention of the grant of the patent: **30.05.2018**
(21) Application number: 13197248.1
(22) Date of filing: 13.12.2013
(51) Int. Cl.: H04N 21/41, H04L 12/28, H04N 21/436, H04N 21/482, H04N 21/485, H04L 12/24

(54) **Content playing apparatus, method for providing UI of content playing apparatus, network server, and method for controlling by network server**
Inhaltswiedergabevorrichtung, Verfahren zur Bereitstellung einer Benutzeroberfläche einer Inhaltswiedergabevorrichtung, Netzwerkserver und Verfahren zur Steuerung durch Netzwerkserver
Appareil de lecture de contenu, procédé de fourniture d'une interface utilisateur d'un appareil de lecture de contenu, serveur de réseau et procédé de commande par le serveur de réseau

(30) Priority: 14.12.2012 KR 20120146335
(43) Date of publication of application: 18.06.2014
(60) Divisional application: 18164147.3
(73) Proprietor: Samsung Electronics Co., Ltd., Gyeonggi-do 443-742 (KR)
(72) Inventor: Lee, Kang-min, Gyeonggi-do (KR); Shim, Jung-hyun, Gyeonggi-do (KR); Jin, Sun-mi, Seoul (KR); Kweon, Ji-hyeon, Gyeonggi-do (KR)
(74) Representative: HGF Limited

(56) References cited:
- EP-A2- 2 511 813
- WO-A1-2005/022377
- WO-A2-2011/038032
- US-A1- 2009 138 921
- US-A1- 2009 233 593
- US-A1- 2011 291 971
- US-A1- 2011 310 298
- US-A1- 2012 060 100
- US-A1- 2012 259 957
- MINJUNG KIM ET AL: "Data exchange method for web-based collaboration system between smart devices", COMPUTING AND CONVERGENCE TECHNOLOGY (ICCCT), 2012 7TH INTERNATIONAL CONFERENCE ON, IEEE, 3 December 2012 (2012-12-03), pages 160-163, XP032422011, ISBN: 978-1-4673-0894-6

## Description

### CROSS-REFERENCE TO RELATED APPLICATION

This application claims priority from Korean Patent Application No. 10-2012-0146335, filed on December 14, 2012, in the Korean Intellectual Property Office.

### BACKGROUND

### 1. Field

Methods and apparatus consistent with exemplary embodiments relate to a content playing apparatus, a method for providing a user interface (UI) of the content playing apparatus, a network server, and a method for controlling by the network server, and more particularly, to a content playing apparatus that can provide a content item using a network, a method for providing a UI of the content playing apparatus, a network server, and a method for controlling by the network server.

### 2. Description of the Related Art

In general, a home network system refers to a network system that provides a home network which is installed at home and is separate from (though may communicate with) an external communication network, and enables intelligent communication. Such a networked system allows information resources to be shared in households and can maximize efficiency of individual products.

Home devices constituting the home network may include (1) an information system device such as a personal computer, a facsimile machine, a scanner, and a printer, (2) an audio/video (A/V) device such as a television (TV), a set-top box, a digital versatile disk (DVD) player, a video cassette recorder (VCR), a stereo system, a camcorder, and a home video game machine, (3) a control system device such as a coffee maker, an electric rice cooker, a refrigerator, a washing machine, a microwave oven, and a camera, and/or (4) a dummy device such as a remote controller, an interphone, a sensor, and a light.

Today, a portable device which is easy to carry may be included in the home network system, and the home network system may be used to control portable devices as well as home devices.

The home devices and the portable devices may be connected to a subnetwork such as a telephone wire, a wireless local area network (LAN), Bluetooth, a universal serial bus (USB), IEEE 1394, or a power line network.

Since the home network system may include various devices as described above, there is a demand for a method for controlling devices in the home network system more easily.

US-2011/0291971-A1 discloses an integrated touch screen handheld device including a control unit, a storage unit, a main body display unit, a first connection unit capable of communication directly or via an internal network with a first device compliant with a predetermined standard, a second connection unit capable of connecting to a second device not compliant with the predetermined standard, and a third connection unit capable of at least one of near field communication and infrared communication, wherein the control unit an carry out reproducing and displaying the first device, the second device and a screen of the main body display unit.

EP-2511813-A2 discloses a method for sharing media content displayed in a window of a touch input interface of a first electronic device with at least one second electronic device.

US-2011/0310298-A1 discloses a method and system to control a non-gesture controlled device using gesture interactions with a gesture controlled device.

WO-2005/022377-A1 discloses a method and system to display media content data for playback on a playback device. The system may include a playback unit and a remote control device.

### SUMMARY

The invention is defined by the appended claims.

One or more exemplary embodiments provide a content playing apparatus which provides a UI to control devices which are in communication over a network, a method for providing a UI of the content playing apparatus, a network server, and a method for controlling by the network server.

According to an aspect of an exemplary embodiment, there is provided a content playing apparatus including: an input unit that is configured to receive a content item sharing command; a communication unit that, when the input unit receives the content item sharing command, is configured to: transmit the content item sharing command to a network apparatus, and receive information on (e.g. associated with) at least one device that is connected to the network apparatus, wherein the network apparatus has determined the at least one device using priority information about the at least one device; a graphical user interface (GUI) processor that is configured to generate a user interface (e.g. an integrated user interface) (UI) to control the at least one device, based on the information on the at least one device received by the communication unit; a display that is configured to display the UI (e.g. the integrated UI); and a controller that, when a user command to control an operation of the at least one device is input through the UI (e.g. the integrated UI), is configured to transmit the user command to the network apparatus such that the network apparatus controls the operation of the at least one device.

The information on the at least one device that is received by the communication unit may include at least one of a type of a device that is related to the content item sharing command from among devices in communication with the network apparatus, and a device state of the device.

The UI (e.g. integrated UI) may include at least one of an item including information on a content item for which the content item sharing command is input, an item for controlling a playback state of the content, and an item for controlling a device state of the device.

The controller may be configured to control the GUI processor to generate a UI (e.g. an integrated UI) to control a plurality of devices that are related to the content item sharing command, based on the information on the at least one device received by the communication unit.

According to an aspect of another exemplary embodiment, there is provided a network apparatus including: a communication unit that is configured to communicate with a plurality of devices; and a controller that, when a content item sharing command is received from a content playing apparatus from among the plurality of devices, is configured to: determine at least one of the plurality of devices using priority information about the at least one of the plurality of devices; and provide information on (e.g. associated with) the at least one of the plurality of devices to the content playing apparatus, wherein, when a user command input through a UI (e.g. an integrated user interface (UI)) that is generated based on the information on the at least one of the plurality of devices is received from the content playing apparatus, the controller is configured to control an operation of a device among the at least one of the plurality of devices according to the user command.

The controller may be configured to transmit a control command to control the operation of the device, according to the received user command, to the device.

The information on the at least one of the plurality of devices may include at least one of a type of a device that is related to the content item sharing command from among devices in communication with the communication unit, and a device state of the device.

The UI (e.g. integrated UI) may include at least one of an item including information on a content item for which the content item sharing command is input, an item for controlling a playback state of the content item, and an item for controlling a device state of the device.

When the content item sharing command is received, the controller may be configured to transmit a control command to set at least one device that is related to the content item sharing command from among the plurality of devices to a predetermined state, to the at least one device, and may transmit information on the predetermined state to the content playing apparatus.

According to an aspect of still another exemplary embodiment, there is provided a method for providing a user interface (UI) of a content playing apparatus, the method including: when a content item sharing command is input, transmitting the content item sharing command to a network apparatus , and receiving information on at least one device that is connected to the network apparatus, wherein the network apparatus has determined the at least one device using priority information about the at least one device; generating a UI (e.g. an integrated UI) to control the at least one device based on the received information; displaying the UI (e.g. the integrated UI); and, when a user command to control an operation of the at least one device is input through the UI (e.g. the integrated UI), transmitting the user command to the network apparatus.

The information on the at least one device may include at least one of a type of a device that is related to the content item sharing command from among devices in communication with the network apparatus, and a device state of the device.

The UI (e.g. the integrated UI) may include at least one of an item including information on a content item for which the content item sharing command is input, an item for controlling a playback state of the content, and an item for controlling a device state of the device.

The generating may include generating a UI (e.g. an integrated UI) to control a plurality of devices that are related to the content item sharing command, based on the information on the at least one device.

According to an aspect of still another exemplary embodiment, there is provided a method for controlling by a network apparatus, the method including: receiving a content item sharing command from a content playing apparatus from among a plurality of devices; when the content item sharing command is received, determining at least one device of the plurality of devices using priority information about the at least one of the plurality of devices, and providing information on the at least one of the plurality of devices to the content playing apparatus; and, when a user command input through a UI (e.g. an integrated user interface (UI)) that is generated based on the information on the at least one of the plurality of devices is received from the content playing apparatus, controlling an operation of a device among the at least one of the plurality of devices according to the user command.

The controlling may include transmitting a control command to control the operation of the device according to the received user command, to the device.

The information on the at least one of the plurality of devices may include at least one of a type of a device that is related to the content item sharing command from among devices in communication with the network apparatus, and a device state of the device.

The UI (e.g. the integrated UI) may include at least one of an item including information on a content item for which the content item sharing command is input, an item for controlling a playback state of the content, and an item for controlling a device state of the device.

The method may further include: when the content item sharing command is received, transmitting a control command to set at least one device that is related to the content sharing command from among the plurality of devices to a predetermined state to the at least one device; and transmitting information on the predetermined state to the content playing apparatus.

Also disclosed is a non-transitory computer readable medium storing a program causing a computer to execute a method for providing a user interface (UI) of a content playing apparatus, the method including: when a content sharing command is input, communicating with a network apparatus that is connected to at least one device, and receiving information on the at least one device; generating a UI (e.g. an integrated UI) to control the at least one device based on the received information; displaying the UI (e.g. the integrated UI); and when a user command to control an operation of the at least one device is input through the UI (e.g. the integrated UI), transmitting the user command to the network apparatus.

The information on the at least one device may include at least one of a type of a device that is related to the content sharing command from among devices in communication with the network apparatus, and a device state of the device.

The UI (e.g. the integrated UI) may include at least one of an item including information on a content item for which the content sharing command is input, an item for controlling a playback state of the content, and an item for controlling a device state of the device.

The generating may include generating a UI (e.g. an integrated UI) to control a plurality of devices that are related to the content sharing command, based on the information on the at least one device.

Also disclosed is a non-transitory computer readable medium storing a program causing a computer to execute a method for controlling by a network apparatus, the method including: receiving a content sharing command from a content playing apparatus from among a plurality of devices; when the content sharing command is received, providing information on at least one of the plurality of devices to the content playing apparatus; and when a user command input through a UI (e.g. an integrated user interface (UI)) that is generated based on the information on the at least one of the plurality of devices is received from the content playing apparatus, controlling an operation of a device among the at least one of the plurality of devices according to the user command.

The controlling may include transmitting a control command to control the operation of the device according to the received user command, to the device.

The information on the at least one of the plurality of devices may include at least one of a type of a device that is related to the content sharing command from among devices in communication with the network apparatus, and a device state of the device.

The UI (e.g. the integrated UI) may include at least one of an item including information on a content item for which the content sharing command is input, an item for controlling a playback state of the content item, and an item for controlling a device state of the device.

When the content sharing command is received, a control command may be transmitted to set at least one device that is related to the content sharing command from among the plurality of devices to a predetermined state, to the at least one device; and information on the predetermined state may be transmitted to the content playing apparatus.

Also disclosed is a computer program comprising instructions arranged, when executed, to implement a method and/or apparatus in accordance with any one of the above-described aspects. A further aspect provides machine-readable storage storing such a program.

According to the various exemplary embodiments as described above, the devices existing in the network can be controlled more easily and thus a user's convenience may be improved.

It will be appreciated from the following description that, in certain embodiments of the invention, features concerning the graphic design of user interfaces are combined with interaction steps or means to achieve a technical effect.

It will be appreciated from the following description that, in certain embodiments of the invention, graphic features concerning technical information (e.g. internal machine states, device functions, or device settings) are utilised to achieve a technical effect.

Certain embodiments aim to achieve the technical effect of lowering a burden (e.g. a cognitive, operative, operational, operating, or manipulative burden) of a user when performing certain device interactions.

Certain embodiments aim to achieve the technical effect of providing a more efficient man-machine (user-machine) interface.

### BRIEF DESCRIPTION OF THE DRAWING FIGURES

The above and other aspects will be more apparent by describing in detail exemplary embodiments, with reference to the accompanying drawings, in which:
FIG. 1 illustrates a home network system according to an exemplary embodiment;
FIG. 2 is a block diagram that illustrates a content playing apparatus according to an exemplary embodiment;
FIG. 3 is a block diagram that illustrates the content playing apparatus in detail according to an exemplary embodiment;
FIG. 4 is a view that illustrates a software configuration stored in a storage according to an exemplary embodiment;
FIG. 5 is a block diagram that illustrates a network apparatus according to an exemplary embodiment;
FIGS. 6, 7, 8, 9, 10, 11, and 12 are views that illustrate a UI (which may be described as an integrated UI) according to an exemplary embodiment;
FIG. 13 is a flowchart that illustrates a method for providing a UI of a content playing apparatus according to an exemplary embodiment;
FIG. 14 is a flowchart that illustrates a method for controlling by a network apparatus according to an exemplary embodiment.

### DETAILED DESCRIPTION OF EXEMPLARY EMBODIMENTS

Hereinafter, various exemplary embodiments will be described in greater detail with reference to the accompanying drawings.

In the following description, same reference numerals are used for the same elements when they are depicted in different drawings. The matters defined in the description, such as detailed construction and elements, are provided to assist in a comprehensive understanding of exemplary embodiments. Thus, it is apparent that exemplary embodiments can be carried out without those specifically defined matters. Also, functions or elements known in the related art are not described in detail since they would obscure the exemplary embodiments with unnecessary detail.

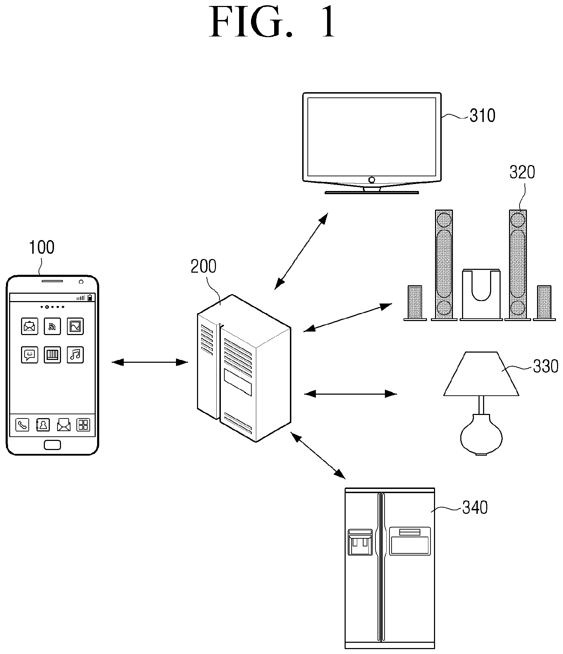

FIG. 1 illustrates a home network system according to an exemplary embodiment. Referring to FIG. 1, a home network system may include a variety of devices such as a content playing apparatus 100, a network apparatus 200, and devices 310, 320, 330, and 340.

The network apparatus 200 may be implemented using a home gateway apparatus or a home network server and controls overall operations of the devices in the home network system. That is, the network apparatus 200 may control an operation of a device that is in communication therewith.

In particular, the network apparatus 200 generates a control command to control at least one of the devices 310, 320, 330, and 340 based on a user command which is received from the content playing apparatus 100, and transmits the control command to each of the devices 310, 320, 330, and 340.

Also, the network apparatus 200 may store a control command corresponding to a user command for each of the devices 310, 320, 330, and 340 in order to control at least one of the devices 310, 320, 330, and 340 based on the received user command.

For example, if the home network system includes the devices shown in FIG. 1, the network apparatus 200 may store control commands to control various functions which are provided by the smart television (TV) 310, the home theater 320, the lamp 330, and the refrigerator 340, and may transmit a control command corresponding to a user command to each of the devices 310, 320, 330, and 340. More specifically, if a user command to change a volume of the home theater 320 is received from the content playing apparatus 100, the network apparatus 200 may transmit a control command to change the volume of the home theater 320 corresponding to the user command from among the pre-stored control commands for the home theater 320.

The content playing apparatus 100 may receive a user command to control one of the devices 310, 320, 330, and 340 and transmit the user command to the network apparatus 200. For example, the content playing apparatus 100 may display a UI (which may be described as an integrated UI) through which a user command may be input. The integrated UI may include an item for controlling an operation of at least one of the devices 310, 320, 330, and 340 of the home network system.

The item of the integrated UI may be changed variously according to a user command which is received from the content playing apparatus 100, or a type of the devices 310, 320, 330, and 340 connected to the network apparatus 200 and constituting the home network system. This will be explained below with reference to the accompanying drawings.

The content playing apparatus 100, which performs the above-described functions, may be implemented using a smartphone as shown in FIG. 1. However, this is merely an example, and the content playing apparatus 100 may be implemented by using various electronic apparatuses that communicate with other devices and have a display function, such as a tablet PC, a smart TV, a PC, and a portable multimedia player (PMP).

The devices 310, 320, 330, and 340 may be implemented using various devices that can join the home network system. For example, the devices 310, 320, 330, and 340 may be implemented using the smart TV 310, the home theater 320, the lamp 330, and the refrigerator 340, respectively, as shown FIG. 1. However, this is merely an example and the devices may be implemented in various forms such as an air conditioner, a washing machine, a monitor, a DVD player, a smartphone, a digital camera, and an e-album.

The content playing apparatus 100 and the devices 310, 320, 330, and 340 may join the home network system by communicating with the network apparatus 100 using various communication methods. For example, the content playing apparatus 100 and the devices 310, 320, 330, and 340 may join the home network system with the network apparatus 200 using a universal plug and play (UPnP) protocol over wired/wireless LAN, WAN, Ethernet, Bluetooth, Zigbee, USB, IEEE 1394, Wi-Fi, or power line communication (PLC).

The content playing apparatus 100 may be present in the home with the devices 310, 320, 330, and 340, or the content playing apparatus 100 may be located outside of the home. That is, the user may control the operations of the devices 310, 320, 330, and 340 in the home using the content playing apparatus 100, or may control the operation of the devices 310, 320, 330, and 340 while outside of the home.

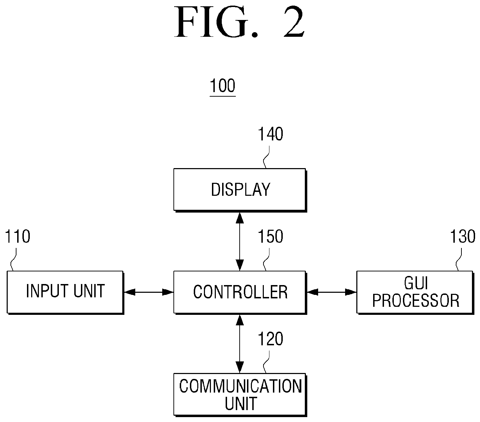

FIG. 2 is a block diagram that illustrates the content playing apparatus according to an exemplary embodiment. Referring to FIG. 2, the content playing apparatus 100 includes an input unit 110, a communication unit 120, a graphic user interface (GUI) processor 130, a display 140, and a controller 150.

The input unit 110 receives various user commands. In particular, the input unit 110 may receive a content sharing command. The content sharing command mentioned herein refers to a user command to share a content item with other devices in the home network system so that the content for which a sharing command is issued may be played back by other devices. Accordingly, if the network apparatus 200 receives a content sharing command from the content playing apparatus 100, the network apparatus 200 may transmit content received from the content playing apparatus 100 to another device in the home network system. Specifically, the network apparatus 200 may transmit the content received from the content playing apparatus 100 to the device that can play back the content.

The content recited herein may be a content item that is pre-stored in the content playing apparatus 100, or may be streamed from an external apparatus (not shown) or a web server (not shown) to the content playing apparatus 100.

For example, if a content sharing command is input to the content playing apparatus 100, the content playing apparatus 100 may transmit content for which the content sharing command is issued to the network apparatus 200 so that content items such as music and moving images can be played back by other devices in the home network system.

To achieve this, the input unit 110 may be implemented by using a key button, a key pad, or a touch screen, or may be implemented to receive a command from a remote control apparatus such as a remote controller.

According to an exemplary embodiment, if the content sharing command is input, the communication unit 120 communicates with the network apparatus 200 which is connected to at least one device, and may receive information about the device. For example, the communication unit 120 may communicate with another device in the home network system via the network apparatus 200 using wired/wireless LAN, WAN, Ethernet, Bluetooth, Zigbee, USB, IEEE 1394, Wi-Fi, or PLC. To achieve this, the communication unit 120 may include a chip or an external input port which corresponds to each communication method.

The information on the device may include at least one of a kind of a device that is related to the content sharing command from among the devices that communicate with the network apparatus 200, and a setting condition of the device.

The device that is related to the content sharing command may refer to a device that can achieve a situation or a condition that the user desires when playing back the content provided by the content playing apparatus 100 through the home network system.

For example, the user may want to have an image output through the smart TV (310 of FIG. 1) and have a sound output through the home theater (320 of FIG. 1), and may want to view the content with the lamp (330 of FIG. 1) turned off.

That is, the device that is related to the content sharing command may include a device that is related to content playback such as the smart TV 310 and the home theater 320, and a device that can enhance a content viewing environment such as the lamp 330. However, a device that has nothing to do with content playback and the content viewing environment such as the refrigerator (340 of FIG. 1) may not be included in the device that is related to the content sharing command.

In the above exemplary embodiment, the smart TV 310, the home theater 320, and the lamp 330 have been described. However, this example is provided merely for convenience of explanation. That is, any device that is related to content playback or that can enhance a content viewing environment from among devices included in the home network system may be included in the device that is related to the content sharing command. The devices may be implemented in various forms such as a projector (not shown), a monitor (not shown), a DVD player (not shown), a digital camera (not shown), an e-album (not shown), a washing machine (not shown), and an air conditioner (not shown).

The network apparatus 200 may pre-store information on the device that is related to the content sharing command.

For example, the network apparatus 100 may receive information on a type, name, and serial number of the device that is related to content playback or that can enhance a content viewing environment from the user and store the information, or may collect the corresponding information from each device and store the information. Also, the network apparatus 200 may receive the corresponding information from the content playing apparatus 100. That is, if the user inputs the information on the device that is related to the content sharing command to the content playing apparatus 100, the network apparatus 200 may receive the corresponding information from the content playing apparatus 100.

Accordingly, the network apparatus 200 communicates with the devices in the home network system and collects information about the type, name, and serial number of each device, thereby determining which device is related to the content sharing command from among the devices in the home network system.

In the above example, the network apparatus 200 transmits the information on the type of the device that is related to the content sharing command to the content playing apparatus 100. However, this is merely an example. That is, the network apparatus 200 may transmit a variety of information for identifying the device that is related to the content sharing command such as the name and serial number of the device to the content playing apparatus 100.

The device state may include information on a current state of the device that is related to the content sharing command from among the devices in the home network system. The device state may include a state of a function that is provided by each device such as a power state, a volume state, and a screen mode state. For example, the device state may include information on the volume state of the smart TV 310, the screen mode state of the smart TV 310, the volume state of the home theater 320, and the power state of the lamp 330. A detailed description thereof will be given below with reference to the drawings of the network apparatus 100.

The GUI processor 130 may generate an integrated UI to control a device based on information on the device. The GUI processor 130 may transmit the integrated UI to the display 140.

The integrated UI may include an item to receive a user command to control the operation of the device that is related to the content sharing command. Specifically, the integrated UI may include an item for controlling the device state. For example, the integrated UI may include an item for controlling the volume state of the smart TV 310, the volume state of the home theater 320, or the power state of the lamp 330.

Also, the integrated UI may include an item related to content playback. Specifically, the integrated UI may include at least one of an item which includes information on the content for which the content sharing command is issued, and an item for controlling a playback state of the content. For example, the item including the information on the content may include the title, replay time, and capacity of the content which is played back in another device in the home network system according to the content sharing command. The information on the content may be pre-stored in the content playing apparatus 100 or may be received from an external apparatus (not shown) or a web server (not shown).

The item for controlling the playback state of the content may include an item for controlling playback of the content such as a progress bar indicating a replay time of the content, pause, reproduction, reproduction of a previous content, and reproduction of a next content.

The display 140 displays various screens. In particular, the display 140 may display the integrated UI. According to an embodiment, the display 140 may be implemented by using a liquid crystal display (LCD) or an organic light emitting diode (OLED). However, this should not be considered as limiting.

The display 140 may be implemented using a touch screen that forms a layer structure with a touch pad. In this case, the display 140 may be used as the input unit 110 that receives various user commands, in addition to functioning as the output apparatus. The touch screen may be configured to detect a touch input location and a touch input region as well as a touch input pressure.

In this embodiment, the display 140 may receive a content sharing command. For example, the display 140 may display a list of contents according to a user command, display a GUI to receive a content sharing command on the list, and receive selection of a content item to be shared. For another example, the display 140 may display a GUI to receive a content sharing command, and, if a corresponding UI is selected, may display a list of contents and receive a selection of a content item to be shared.

The controller 150 controls an overall operation of the content playing apparatus 100.

Specifically, according to an embodiment, if a content sharing command is input, the controller 150 may control the communication unit 120 to transmit a content for which the content sharing command is issued to the network apparatus 200. That is, the controller 150 may transmit the content for which the content sharing command is issued to the network apparatus 200, so that the content can be played back by another device in the home network system.

In this case, the network apparatus 200 may transmit the content to the device that can play back the content from among the devices in the home network system. For example, in the case of the home network system as shown in FIG. 1, the network apparatus 200 may transmit the content to the smart TV 310. At this time, the smart TV 310 may output an image of the content and the home theater 320 connected to the smart TV 310 may output a sound of the content. This will be explained in detail with reference to the drawing of the network apparatus 200.

The controller 150 may control the GUI processor 130 to generate an integrated UI that enables the control of another device in the home network system based on information on the device. The integrated UI may include at least one of an item including information on the content for which the content sharing command is issued, an item for controlling a playback state of the content, and an item for controlling a device state.

Specifically, the controller 150 may control the GUI processor 130 to generate information on the content item for which the content sharing command is input and an item for controlling a playback state of the content item. That is, the controller 150 may generate information on the content item that is played back by another device in the home network system according to the content sharing command, and a control item for controlling a playback state of the corresponding content item.

Also, the controller 150 may control the GUI processor 130 to generate an item for controlling a device state based on information on the device, which is received from the network apparatus 200.

Specifically, the controller may determine which device it intends to control through the integrated UI using information on the type of the device that is related to the content sharing command, and may generate an item for controlling a device state of each device.

For example, in the case of the home network system as shown in FIG. 1, the smart TV 310, the home theater 320, and the lamp 330 may be included in the device that is related to the content sharing command. In this case, the controller 150 determines the home theater 320 and the lamp 330 as the device that it intends to control through the integrated UI. The controller 150 may generate an item for controlling the volume of the home theater 320 and an image for controlling the power of the lamp 330.

In the case of FIG. 1, the smart TV 310 and the home theater 320 correspond to devices that are related to content playback from among the devices that are related to the content sharing command. However, since the user generally wants to control the volume of the content when viewing the content, the controller 150 may determine the device that outputs a sound from among the devices that are related to the content playback as the device that it intends to control through the integrated UI.

To achieve this, the network apparatus 200 may transmit information on the device that outputs the sound to the content playing apparatus 100. In the case of the home network system as shown in FIG. 1, the network apparatus 200 may transmit information indicating that the image of the content is output from the smart TV 310 and the sound of the content is output from the home theater 320 to the content playing apparatus. Accordingly, the controller 150 may determine that the device that outputs the sound when sharing the content is the home theater 320.

However, in the above example, if the home theater 320 is not provided, the network apparatus 200 may transmit information indicating that the smart TV 310 outputs both the image and the sound of the content to the content playing apparatus 100. In this case, the controller 150 may determine that the device that outputs the sound when sharing the content is the smart TV 310 and may output an item for controlling the volume of the smart TV 310.

Also, in the above example, the item for controlling the volume of the device that outputs the sound is generated. However, this is merely an example. That is, the controller 150 may generate an item for controlling the device that outputs the image. For example, in the case of the home network system of FIG. 1, the controller 150 may generate an item for controlling a screen mode of the smart TV 310 which outputs the image (for example, a movie screen mode, a standard screen mode, and a clear screen mode), and may add the item to the integrated UI.

The controller 150 may generate an image for controlling the device according to a current device state of each device based on information on the device state. In the above example, the controller 150 may generate an item for controlling the volume of the smart TV 310 based on a current volume state of the smart TV 310, and may generate an item for controlling the volume of the home theater 320 based on a current volume state of the home theater 320. Also, if the lamp 330 is turned off, the controller 150 may generate an item for turning on the lamp 330.

If a user command to control an operation of an external apparatus is input on the integrated UI, the controller 150 transmits the user command to the network apparatus 200 so that the network apparatus 200 controls the operation of the external apparatus. That is, the controller 150 determines a user command which is input through the integrated UI, transmits the user command to the network apparatus 200, and controls the device that is related to the content sharing command to perform an operation corresponding to the user command.

For example, if the display 140 displaying the integrated UI is implemented using a touch screen, the controller 150 may determine an item that is selected on the integrated UI based on information on coordinates of touch which are transmitted from the touch screen, and may control the communication unit 120 to transmit a user command corresponding to the item to the network apparatus 200.

More specifically, in the case of the home network system as shown in FIG. 1, the integrated UI displayed on the display 140 may include an item for controlling the volume state of the home theater 320 and an item for controlling the power state of the lamp 330.

For example, if a user command to change the volume state of the home theater 320 is input, the controller 150 transmits the user command to the network apparatus 200 so that the network apparatus 200 controls the volume of the home theater 320 to be changed according to the user command. If a user command to change the power state of the lamp 330 is input, the controller 150 transmits the user command to the network apparatus so that the network apparatus 200 controls the power state of the lamp 330 to be changed according to the user command.

Also, in the case of the home network system as shown in FIG. 1, the integrated UI may include an item for controlling content.

For example, if a user command to pause content playback is input, the controller 150 transmits the user command to the network apparatus 200 so that content output from the smart TV 310 and the home theater 320 is paused. However, the controller 150 may transmit the content continuously.

If a user command to play back the paused content is input, the controller 150 transmits the user command to the network apparatus 200 so that the content paused in the smart TV 310 and the home theater 320 is played back.

If a user command to change a playback position on the progress bar is input, the controller 150 transmits the user command to the network apparatus 200 so that the network apparatus 200 controls the smart TV 310 and the home theater 320 to output the content from the playback position selected by the user.

If a user command to select a next content or a previous content is input, the controller 150 may transmit the corresponding content to the network apparatus 100 so that the content selected by the user is output from the smart TV 310 and the home theater 320. The controller 150 may transmit a control command to stop playback of the current content and to play back a newly transmitted content to the network apparatus 200, so that the network apparatus 200 controls the new content to be played back in the smart TV 310 and the home theater 320.

The controller 150 may generate an item for receiving a user command to stop the content sharing command and may add the item to the integrated UI. Accordingly, if the item for stopping the content sharing command is selected, the controller 150 may transmit a user command corresponding to the item to the network apparatus 200.

The controller 150 may control the GUI processor 130 to generate an integrated UI for controlling a plurality of devices that are related to the content sharing command based on information on the devices. Specifically, if a plurality of devices are related to the content sharing command from among the devices constituting the home network system, the controller 150 may generate an integrated UI to include an image for controlling each of the plurality of devices. That is, in the example as shown in FIG. 1, the controller 150 may generate an integrated UI to including an item for controlling the volume state of the home theater 320 and an item for controlling the power state of the lamp 330.

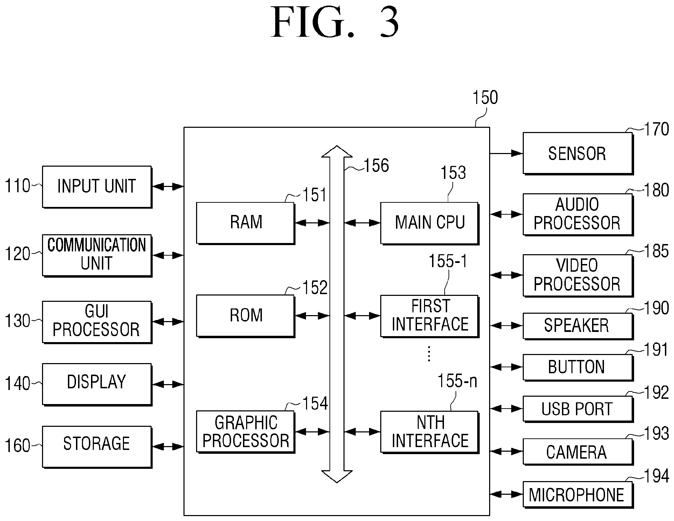

FIG. 3 is a block diagram that illustrates the content playing apparatus in detail according to an exemplary embodiment. Referring to FIG. 3, the content playing apparatus includes an input unit 110, a communication unit 120, a GUI processor 130, a display 140, a controller 150, a storage 160, a sensor 170, an audio processor 180, a video processor 185, a speaker 190, a button 191, a USB port 192, a camera 193, and a microphone 194. The same elements as those of FIG. 2 will not be explained in detail.

The above-described operations of the controller 150 may be performed by a program which is stored in the storage 160. The storage 160 may store an operating system (OS) software module for driving the content playing apparatus 100, various applications, various data which are input or set when an application is executed, and various data such as contents.

The storage 160 may store a variety of information for playing back content using devices of the home network system. For example, the storage 160 may store information on a type, a name, and a serial number of a device that is related to a content sharing command, and may store information on priority of a device that outputs a sound from among devices that are related content reproduction.

To achieve this, the storage 160 may include a storage medium of at least one type of a flash memory type, a hard disk type, a multimedia card micro type, a memory of a card type (for example, an SD or XD memory), a random access memory (RAM), and a read only memory (ROM).

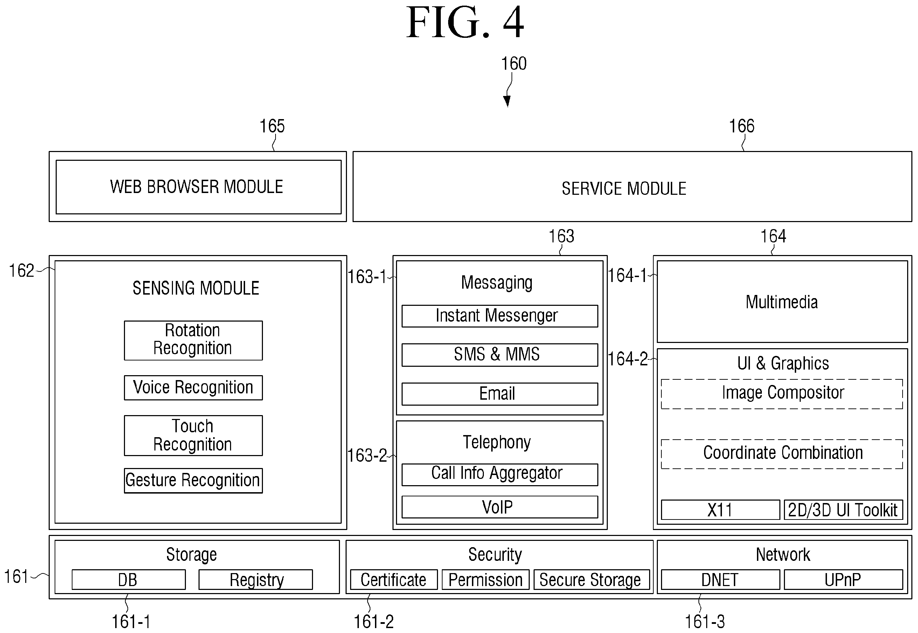

Various software modules stored in the storage 160 will be explained below in detail with reference to FIG. 4.

The sensor 170 may sense a variety of manipulation such as touch, motion, rotation, tilt, pressure, and approach on the content playing apparatus 100.

In particular, the sensor 170 may include a touch sensor that senses a touch. The touch sensor 170 may be implemented using a capacitive type or a resistive type of sensor. The capacitive type calculates touch coordinates by sensing minute electricity excited in a user's body when a part of the user's body touches a surface of the display 140, using a dielectric substance coated on the surface of the display 140. The resistive type includes two electrode plates, and, if a user touches a screen, calculates touch coordinates by sensing an electric current flowing due to contact between upper and lower plates at a point touched by the user. The touch sensor may be implemented in various forms.

The sensor 170 may include a geomagnetic sensor, a gyro sensor, and/or an acceleration sensor for sensing movement of the content playing apparatus 100 caused by a user. The geomagnetic sensor may sense a rotation state and a movement direction of the content playing apparatus 100, the gyro sensor may sense a rotation state of the content playing apparatus 100, and the acceleration sensor may sense a tilt of the content playing apparatus 100.

If the sensor 170 senses that a user touches an item provided on a UI, the controller 150 may perform an operation corresponding to a function of the item on the UI that was touched by the user. For example, the controller 150 may determine an item that is selected on an integrated UI based on a result of the sensing, and may transmit a user command corresponding to the item to the network apparatus 200.

If rotation of the content playing apparatus 100 from a portrait mode to a landscape mode is sensed by the sensor 170, the controller 150 may either rescale or change a UI screen that has been displayed according to the portrait mode to be appropriate to the landscape mode, and may display the UI screen.

Although in some cases the UI screen corresponding to the portrait mode or the landscape mode may be changed by rescaling, in other cases different UI elements may be included on the UI screen corresponding to the portrait mode as compared to the UI screen corresponding to the landscape mode, and/or sizes and locations of UI elements may differ between the UI screen corresponding to the portrait mode and the UI screen corresponding to the landscape mode.

The audio processor 180 processes audio data. The audio processor 190 may perform various processing operations such as decoding, amplification, and noise filtering with respect to the audio data.

The video processor 185 processes video data. The video processor 185 may perform various image processing operations such as decoding, scaling, noise filtering, frame rate conversion, and resolution conversion with respect to the video data.

The speaker 190 may output various notification sounds or voice messages as well as various audio data processed by the audio processor 180.

The button 191 may be various types of buttons such as a mechanical button, a touch pad, and/or a wheel which is formed on a certain region of an exterior body of the content playing apparatus, such as a front region, a side region, and/or a rear region. For example, a button for turning on or off the content playing apparatus 100 may be provided.

The USB port 192 may communicate with various external apparatuses via a USB cable and/or may perform charging.

The camera 193 photographs a still image or a moving image under the control of the user. The camera 193 may include a plurality of cameras such as a front camera and/or a rear camera.

The microphone 194 receives a user voice or other sound and converts the user voice or other sound into audio data. The controller 150 may use a user voice that is input through the microphone 194 in a calling process and/or may convert the user voice into audio data and may store the audio data in the storage 160.

If the camera 193 and the microphone 194 are provided, the controller 150 may perform a control operation according to a user voice which is input through the microphone 194 and/or user motion which is recognized by the camera 193. That is, the content playing apparatus 100 may be operated in a motion control mode or a voice control mode.

In the motion control mode, the controller 150 uses the camera 193 to track a change in a user's motion and performs a corresponding control operation. In the voice control mode, the controller 150 may be operated in a voice recognition mode in which a user's voice which is input through the microphone is analyzed and a control operation is performed according to the analyzed user voice. For example, if an answer to a specific question is input as specific motion or a specific voice, the controller 150 may detect the corresponding answer.

Besides these, the content playing apparatus 100 may further include various external input ports to be connected to various external terminals such as a headset and a mouse.

The controller 150 controls an overall operation of the content playing apparatus 100 using various programs stored in the storage 160.

For example, the controller 150 may execute an application stored in the storage 160 and may play back various contents stored in the storage 160.

Specifically, the controller 150 includes a RAM 151, a ROM 152, a main CPU 153, a graphic processor 154, first to nth interfaces 155-1 to 155-n, and a bus 156.

The RAM 151, the ROM 152, the main CPU 153, the graphic processor 154, and the first to nth interfaces 155-1 to 155-n may be connected to one another through the bus 156.

The first to nth interfaces 155-1 to 155-n may be connected to the above-described elements. One of the interfaces may be a network interface which is connected to an external apparatus through a network.

The main CPU 153 accesses the storage 160 and performs booting using the OS stored in the storage 160. The main CPU 153 performs various operations using various programs, contents, and data stored in the storage 160.

The ROM 152 stores a set of commands for system booting. If a turn-on command is input and power is supplied, the main CPU 153 copies the OS which is stored in the storage 160 into the RAM 151 according to a command stored in the ROM 152, executes the OS, and boots the system. If booting is completed, the main CPU 153 copies various applications stored in the storage 160 into the RAM 151, executes the applications copied into the RAM 151, and performs various operations.

The graphic processor 154 may generate a screen including various objects such as an icon, an image, and/or text using a calculator (not shown) and a renderer (not shown). The calculator (not shown) may calculate attribute values such as coordinates, shape, size, and color of each object to be displayed according to a layout of the screen. The renderer (not shown) may generate a screen of various layouts including objects based on the attribute values calculated by the calculator (not shown). The screen generated by the renderer (not shown) may be displayed on a display region of the display 140.

FIG. 3 illustrates examples of elements included in the content playing apparatus 100. Some of the elements of FIG. 3 may be omitted or changed, or another element may be added according to exemplary embodiments. For example, the content playing apparatus 100 may further include a GPS receiver (not shown) to receive a GPS signal from a GPS satellite and calculate a current location of the content playing apparatus 100, and/or a digital multimedia broadcasting (DMB) receiver (not shown) to receive and process a DMB signal.

FIG. 4 is a view that illustrates a software configuration which is stored in the storage according to an exemplary embodiment.

Referring to FIG. 4, the storage 160 may store software including a base module 161, a sensing module 162, a communication module 163, a presentation module 164, a web browser module 165, and a service module 166.

The base module 161 refers to a base module that processes signals transmitted from each hardware element included in the content playing apparatus 100, and transmits the signals to an upper layer module. The base module 161 includes a storage module 161-1, a security module 161-2, and a network module 161-3. The storage module 161-1 is a program module that manages a database (DB) or a registry. The main CPU 153 may access the database in the storage 160 using the storage module 161-1 and may read out various data. The security module 161-2 is a program module that supports certification for hardware, permission of a request, and a secure storage, and the network module 161-3 includes a Distributed.net (DNET) module and a Universal Plug and Play (UPnP) module as a module for supporting a network connection.

The sensing module 162 is a module that collects information from various sensors, analyzes the collected information, and manages the collected information. Specifically, the sensing module 162 may include a face/gesture recognition module, a voice recognition module, a motion/rotation recognition module, and a touch recognition module.

The communication module 163 is a module that communicates with an external apparatus. The communication module 163 may include a messaging module 163-1 such as a messenger program, a short message service (SMS) and multimedia message service (MMS) program, and an email program, and a telephony module 163-2 which may include a call information aggregator program module and a voice over internet protocol (VoIP) module.

The presentation module 164 is a module that generates a display screen. The presentation module 164 may include a multimedia module 164-1 that plays back multimedia contents and outputs the multimedia contents, and a UI rendering module 164-2 that processes a UI and graphics. The multimedia module 164-1 may include a player module, a camcorder module, and/or a sound processing module. Accordingly, the multimedia module 164-1 may generate a screen and a sound by playing back various multimedia contents, and plays back the same. The UI rendering module 164-2 may include an image compositor module that combines images, a coordinate combination module that combines coordinates on a screen to display an image and generate coordinates, an X11 module that receives various events from hardware, and/or a 2D/3D UI toolkit that provides a tool for configuring a UI of a 2D or 3D format. For example, the UI rendering module 164-2 may be used to generate various UIs for conducting a mission.

The web browser module 165 is a module that performs web-browsing and accesses a web server. The web browser module 165 may include a web view module that renders and displays a web page, a download agent module that downloads, a bookmark module, and/or a web-kit module.

The service module 166 is a module that includes various applications to provide various services. Specifically, the service module 166 may include various program modules such as a navigation program, a content playing program, a game program, an e-book program, a calendar program, a notice management program, and/or other widgets, besides the UI providing program according to an exemplary embodiment. For example, the service module 166 may include a service program to provide a UI for setting an electronic key using condition according to an exemplary embodiment.

In FIG. 4, various program modules are illustrated, but some of the program modules may be omitted or changed, or a new module may be added according to type and characteristic of the content playing apparatus 100. For example, the content playing apparatus 100 may further include a location-based module to support a location-based service in association with hardware such as a GPS chip.

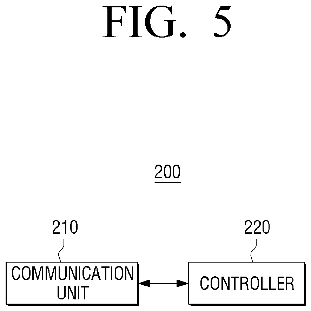

FIG. 5 is a block diagram that illustrates the network apparatus according to an exemplary embodiment. Referring to FIG. 5, the network apparatus includes a communication unit 210 and a controller 220.

The communication unit 210 communicates with a plurality of devices. Specifically, the communication unit 210 may communicate with a plurality of devices included in a home network system. For example, in the case of the home network system as shown in FIG. 1, the communication unit 210 may communicate with the content playing apparatus 100 and the devices 310, 320, 330, and 340.

In particular, the communication unit 210 may receive content by communicating with the content playing apparatus 100 and may transmit the received content to the device that can play back the content from among the devices included in the home network system. The device that can play back the content may be a device that can output both an image and a sound and may be the smart TV 310 in the home network system shown in FIG. 1.

The communication unit 210 may receive information on each of the devices 310, 320, 330, and 340 by communicating with the devices 310, 320, 330, and 340. Specifically, the communication unit 210 may receive information on a type, a name, and a serial number of the device from each of the devices 310, 320, 330, and 340.

The communication unit 210 may transmit a variety of information received from the devices in the home network system to the content playing apparatus 100. Specifically, the communication unit 120 may transmit information on a device that is related to a content sharing command from among the devices of the home network system to the content playing apparatus 100. In this case, the information on the device may include at least one of a type, a name, a serial number, and a device state of the device.

The communication unit 210 may transmit a control command to the device of the home network system. Specifically, the communication unit 210 may transmit a control command corresponding to a user command which is received from the content playing apparatus 100 to each device.

The controller 220 controls an overall operation of the network apparatus 200.

Specifically, the controller 220 may determine a device that can play back a content item based on information about the device which is received from each device in the home network system. The device that can play back the content may include a device that can output both an image and a sound. For example, in the case of the home network system as shown in FIG. 1, the device that can reproduce the content may include the smart TV 310.

To achieve this, the network apparatus 200 may pre-store information on the device that can play back the content. For example, the network device 200 may receive information on a type, a name, and a serial number of the device that can play back the content from the user and store the information, or may collect the information from each device and store the information. Also, the network apparatus 200 may receive the corresponding information from the content playing apparatus 100. That is, if the user inputs information on the device that can play back the content to the content playing apparatus 100, the network apparatus 100 may receive the corresponding information from the content playing apparatus 100 and store the information.

Accordingly, the controller 220 may receive information on a type, a name, and a serial number of each device from the devices in the home network system, compare the information and the pre-stored information, and determine the device that can play back the content from the devices existing in the home network system.

If a content sharing command is received from the content playing apparatus 100, the controller 220 may transmit the content received from the content playing apparatus 100 to the device that can play back the content. For example, in the case of the home network system as shown in FIG. 1, the controller 220 may control to transmit the content to the smart TV 310. In this case, the smart TV 310 is connected to the home theater 320, and the smart TV 310 outputs an image on the content and the home theater 320 outputs a sound on the content. However, if the home theater 320 is not provided in FIG. 1, the smart TV 310 may output both the image and the sound.

If the content sharing command is transmitted from the content playing apparatus 100, the controller 220 may provide information on at least one of the plurality of devices to the content playing apparatus 100.

The device may include a device that is related to the content sharing command from among the devices in the home network system.

Specifically, if the content sharing command is received, the controller 220 determines the device that is related to the content sharing command from among the plurality of devices of the home network system. The controller 220 may transmit information on the device that is related to the content sharing command to the content playing apparatus 100.

To achieve this, the network apparatus 200 may pre-store information on the device that is related to the content sharing command. For example, the network apparatus 200 may receive information on a type, a name, and a serial number of the device that is related to the content sharing command from the user and store the information, or may collect the corresponding information from each device and store the information. Also, the network apparatus 200 may receive the corresponding information from the content playing apparatus 100. That is, if the user inputs information on the device that is related to the content sharing command to the content playing apparatus 100, the network apparatus 200 may receive the corresponding information from the content playing apparatus 100 and store the information.

The device that is related to the content sharing command may include a device that can achieve a situation or a condition that the user wishes when playing back the content provided by the content playing apparatus 100 through another device in the home network apparatus. Specifically, the device that is related to the content sharing command may include a device that is related to content playback or can enhance a content viewing environment.

For example, the network apparatus 200 may pre-store the smart TV 310 and the home theater 320 as the device that is related to content playback, and may store the lamp 330 as the device that can enhance a content viewing environment. Accordingly, in the case of the home network system as shown in FIG. 1, the controller 220 may determine the smart TV 310 and the home theater 320 as the device that is related to content playback, and may determine the lamp 330 as the device that can enhance a content viewing environment, based on the information received from the devices of the home network system. That is, the controller 220 may determine the smart TV 310, the home theater 320, and the lamp 330 as the device that is related to the content sharing command, and may determine that the refrigerator 340 is not included in the device that is related to the content sharing command.

However, if the home theater 320 does not exist in the home network system of FIG. 1, the controller 220 may determine the smart TV 310 and the lamp 330 as the device that is related to the content sharing command. Also, if the home theater 320 and the lamp 330 do not exist in the home network system of FIG. 1, the controller 220 may determine only the smart TV 310 as the device that is related to the content sharing command.

As described above, the controller 220 may compare the information on the device which is received from each device of the home network system and the pre-stored information, and may determine the device that is related to the content sharing command from among the devices existing in the home network system.

The information on the device may include at least one of a type of the device that is related to the content sharing command from among the devices that are in communication with the communication unit 210, and a device state of the device.

Accordingly, the content playing apparatus 100 may generate an integrated UI to control the device in the home network system that is related to the content sharing command, using the information on the type of the device that is related to the content sharing command, and may provide the integrated UI to the user. This has been described above with reference to the drawings regarding the content playing apparatus 100.

The controller 220 may determine a device that will output a sound from among the devices that are related to content playback, and may transmit information on the device that will output a sound to the content playing apparatus 100.

To achieve this, the network apparatus 200 may store priority information about the device that will output a sound. For example, if the smart TV and the home theater exist in the home network system, the network apparatus 100 may store priority information indicating that the home theater should output a sound (instead of the smart TV), and, if only the smart TV exists in the home network system, the network apparatus 200 may store priority information indicating that the smart TV should output a sound.

In the case of the home network system as shown in FIG. 1, the controller 220 may determine that the device that will output a sound is the home theater 320 since the smart TV 310 and the home theater 320 exist in the home network system, and may transmit information indicating that a sound is output from the home theater 320 to the content playing apparatus 100.

However, if the home theater 320 does not exist in the home network system of FIG. 1, the controller 220 may determine that the smart TV 310 is the device that will output a sound and may transmit information indicating that a sound is output from the smart TV 310 to the content playing apparatus 100.

If a user command which is input through the integrated UI generated based on the information the device is received from the content playing apparatus 100, the controller 220 may control the operation of the device according to the user command. The device recited herein may be a device in the home network system that is related to the content sharing command.

As described above, the integrated UI may include at least one of an item which includes information on the content for which the content sharing command is input, an item for controlling a playback state of the content, and an item for controlling a device state of the device.

The controller 220 may transmit a control command to control the operation of the device according to a received user command to the device.

To achieve this, the network apparatus 200 may store a control command corresponding to a user command for each device. For example, the network apparatus 200 may store a control command to control the device that is related to the content sharing command according to a user command for each device.

Accordingly, the controller 220 may determine a control command that corresponds to a user command received from the content playing apparatus 100 from among the pre-stored control commands, transmit the corresponding control command to the device that is related to the content sharing command, and control the operation of the device that is related to the content sharing command.

For example, in the case of the home network system as shown in FIG. 1, the integrated UI which is displayed on the content playing apparatus 100 may include an item for controlling a volume state of the home theater 320 and an item for controlling a power state of the lamp 330.

For example, if a user command to change the volume state of the home theater 320 is input through the integrated UI, the controller 220 may transmit a control command to change the volume state of the home theater 320 to the home theater 320, according to the user command received from the content playing apparatus 100.

Also, if a user command to change the power state of the lamp 330 is input through the integrated UI, the controller 220 may transmit a control command to change the power state of the lamp 330 to the lamp 330, according to the user command received from the content playing apparatus 100.

Also, in the case of the home network system as shown in FIG. 1, the integrated UI which is displayed on the content playing apparatus 100 may include an item for controlling a content item.

For example, if a user command to pause a content item is input through the integrated UI, the controller 220 may transmit a control command to pause playback of a content item according to the user command received from the content playing apparatus 100 to the smart TV 310. Accordingly, playback of the image output from the smart TV 310 may be paused and output of the sound that is received from the smart TV 310 and output from the home theater 320 may be paused. However, this is merely an example. The controller 220 may transmit the control command to both the smart TV 310 and the home theater 320.

Also, if a user command to play back the content that has been paused is input through the integrated UI, the controller 220 may transmit a control command to play back the content that has been paused to the smart TV 310, according to the user command received from the content playing apparatus 100. Accordingly, the smart TV 310 may play back the image that has been paused and the home theater 320 may output the sound that has been paused. However, this is merely an example. The controller 220 may transmit the control command to both the smart TV 310 and the home theater 320.

Also, if a user command to change a playback point of time on the progress bar is input through the integrated UI, the controller 220 may transmit a control command to output the content from the playback point of time selected by the user to the smart TV 310, according to the user command received from the content playing apparatus 100. Accordingly, an image on a new content may be output from the smart TV 310 and a sound on the new content may be output from the home theater 320.

Also, if a user command to select a next content item or a previous content item is input through the integrated UI, the content playing apparatus 100 transmits the content item selected by the user to the network apparatus 200. Accordingly, the controller 220 may transmit the content item selected by the user and a control command to play back the content item to the smart TV 310, and controls the next content item or the previous content item to be output from the smart TV 310 and the home theater 320.

If a user command to stop the content sharing command is input through the integrated UI, the controller 220 may transmit a control command to change a power state of the smart TV 310 according to the user command received from the content playing apparatus 100 to the smart TV 310, and may transmit a control command to change a power state of the home theater 320 to the home theater 320. Accordingly, the smart TV 310 and the home theater 320 may be turned off.

If the content sharing command is transmitted, the controller 220 may transmit a control command to set at least one device that is related to the content sharing command from among the plurality of devices to a predetermined state to the at least one device, and may transmit information on the predetermined state to the content playing apparatus 100.

Specifically, if the content sharing command is received from the content playing apparatus 100, the controller 220 may transmit a control command to each device that is related to the content sharing command and change the device state of the device to the predetermined state, so that a situation or a condition that the user desires when viewing the content can be achieved.

To achieve this, the network apparatus 200 may pre-store a control command to change the device state of the device that is related to the content sharing command. Such a control command may be set and changed by the user.

For example, the user may want to view a content item in a state in which an image is output from the smart TV 310, a sound is output from the home theater 320, and the lamp 330 is turned off.

Accordingly, the network apparatus 100 may store a control command to turn on the smart TV 310, change a screen mode to a movie screen mode, and turn off a volume, a control command to turn on the home theater 320, select an external input terminal connected to the smart TV 310, and set a volume of a predetermined level, and a control command to turn off the lamp 330.

However, this is merely an example. The control command stored to change the setting state of the device may be changed variously. For example, the control command to change the screen mode of the smart TV 310 may be excluded and the control command to turn off the lamp 330 may be excluded.

Accordingly, if the content sharing command is received from the content playing apparatus 100, the controller 220 may transmit the pre-stored control command to each device that is related to the content sharing command and change the device state of the device.

As described above, information on the device state of the device that is related to the content sharing command may be transmitted to the content playing apparatus 100. That is, the controller 220 may transmit the information on the predetermined device state to the content playing apparatus 100.

The information on the predetermined device state may include a power state, a volume state, and a screen mode state of the device that is related to the content sharing command. For example, the controller 220 may control the communication unit 210 to transmit information on the volume state and the screen mode state of the smart TV 310, the volume state of the home theater 320, and the power state of the lamp 330 to the content playing apparatus 100.

Accordingly, the content playing apparatus 100 may generate an integrated UI reflecting the current setting state of each device based on the information on the device state of the device. For example, the integrated UI may include an item for controlling the volume of the smart TV 310 based on the current volume state of the smart TV, an item for controlling the volume of the home theater 320 based on the current volume state of the home theater 320, and an item for turning on the lamp 330 if the lamp 330 is currently turned off.

In the above exemplary embodiments, the network apparatus 200 may store a variety of information. To achieve this, the network apparatus 200 may include a storage medium of at least one type of a flash memory type, a hard disk type, a multimedia card micro type, a memory of a card type (for example, an SD or XD memory), a RAM, and/or a ROM.

Also, in the above exemplary embodiment, the controller 220 transmits the information on all of the devices that are related to the content sharing command from among the devices of the home network system to the content playing apparatus 100. However, this is merely an example. That is, the controller 220 may control to transmit information (for example, a type, a name, and a serial number) on a device that outputs a sound from among the devices that are related to content playback to the content playing apparatus 100. In this case, the controller 220 may not transmit separate information indicating the device that outputs a sound to the content playing apparatus 100.

The content playing apparatus 100 may generate an integrated UI using the information on the device received from the network apparatus 200. Specifically, the controller 150 determines the device that outputs a sound in the home network system based on the information on the device that outputs a sound, and may generate an item for controlling a volume of the corresponding device and may add the item to the integrated UI.

For example, in the case of the home network system as shown in FIG. 1, the controller 220 of the network apparatus 200 may transmit only the information on the home theater 320 and the lamp 330 to the content playing apparatus 100. Accordingly, the controller 150 of the content playing apparatus 100 may determine that the sound is output from the home theater 320, generate an item for controlling the volume of the home theater 320, and control to display the item on the integrated UI.

However, if the home theater 320 does not exist in the home network system as shown in FIG. 1, the controller 220 of the network apparatus 200 may transmit only the information on the smart TV 310 and the lamp 330 to the content playing apparatus 100. Accordingly, the controller 150 of the content playing apparatus 100 may determine that the sound is output from the smart TV 310, generate an item for controlling the volume of the smart TV 310, and control to display the item on the integrated UI.

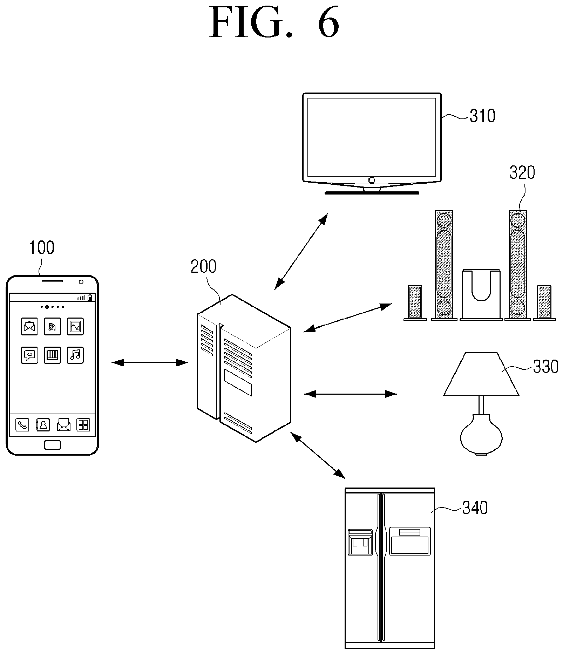

FIGS. 6 to 12 are views to explain an integrated UI which is provided according to an exemplary embodiment.

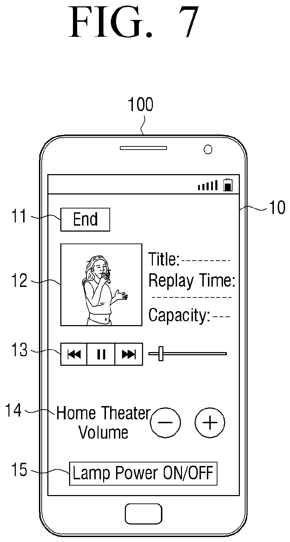

First, FIG. 6 illustrates a home network system which includes a smart TV 310, a home theater 320, a lamp 330, and a refrigerator 340, and FIG. 7 illustrates an integrated UI which may be displayed on a content playing apparatus 100 if the home network system is configured as shown in FIG. 6.

In the case of the home network system as shown in FIG. 6, if a content sharing command is received from the content playing apparatus 100, a network apparatus 200 may transmit information on the smart TV 310, the home theater 320, and the lamp 330, which are devices that are related to the content sharing command, to the content playing apparatus 100. At this time, the network apparatus 200 may transmit information indicating that a sound is output from the home theater 320 to the content playing apparatus 100.

Accordingly, the content playing apparatus 100 generates an integrated UI based on the information received from the network apparatus 200 and displays the integrated UI.

For example, as shown in FIG. 7, the integrated UI 10 may include an item 11 for receiving a user command to stop the content sharing command, an item 12 including information on a content item, an item 13 for controlling content playback, an item 14 for controlling a volume of the home theater 320, and an item 15 for controlling power of the lamp 330.

Accordingly, if a (+) item corresponding to volume up is selected, the network apparatus 200 may transmit a control command to increase the volume of the home theater 320 to the home theater 320, such that the home theater 320 increases the volume and outputs the sound.

If the item for controlling the power state of the lamp 330 is selected, the network apparatus 200 may transmit a control command to change the power state of the lamp 330 to the lamp 330. In this case, the power is turned on if the lamp 330 is turned off.

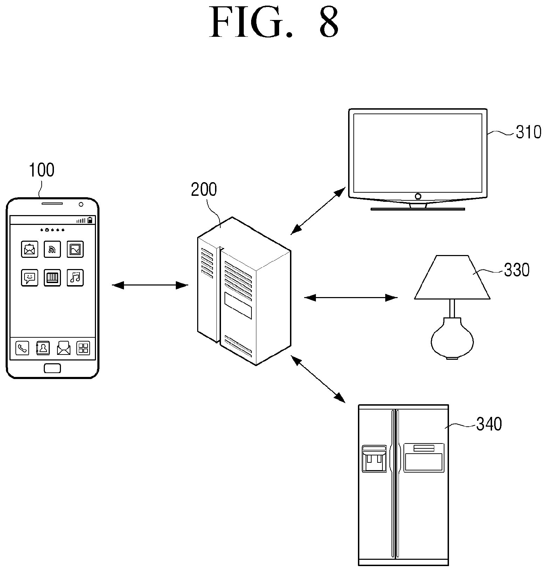

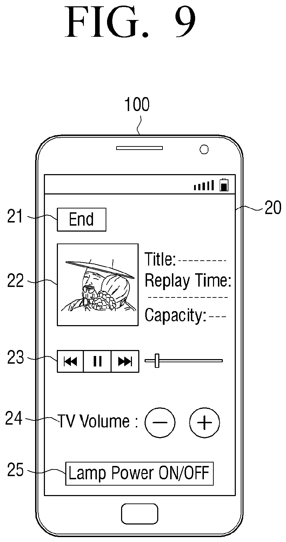

FIG. 8 illustrates the home network system of FIG. 6 without the home theater 320, and FIG. 9 illustrates an integrated UI which is displayed on the content playing apparatus 100 if the home network system is configured as shown in FIG. 8.

In the case of the home network system as shown in FIG. 8, if a content sharing command is received from the content playing apparatus 100, the network apparatus 200 transmits information on the smart TV 310 and the lamp 330, which are devices that are related to the content sharing command, to the content playing apparatus 100. At this time, the network apparatus 200 may transmit information indicating that a sound is output from the smart TV 310 to the content playing apparatus 100.

Accordingly, the content playing apparatus 100 may generate an integrated UI based on the information received from the network apparatus 200, and display the integrated UI.

For example, as shown in FIG. 9, the integrated UI 20 may include an item 21 for receiving a user command to stop the content sharing command, an item 22 including information on a content item, an item 23 for controlling content playback, an item 24 for controlling a volume of the smart TV 320, and an item 25 for controlling power of the lamp 330.

Accordingly, if a (+) item corresponding to volume up is selected, the network apparatus 200 may transmit a control command to increase the volume of the smart TV 310 to the smart TV 310, such that the smart TV 310 increases the volume and outputs the sound.

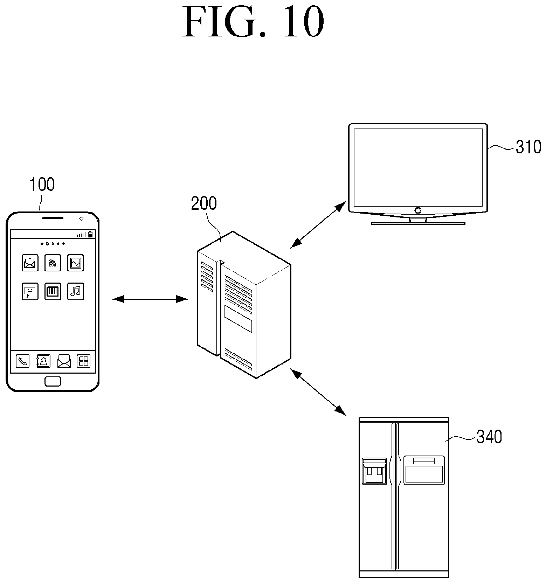

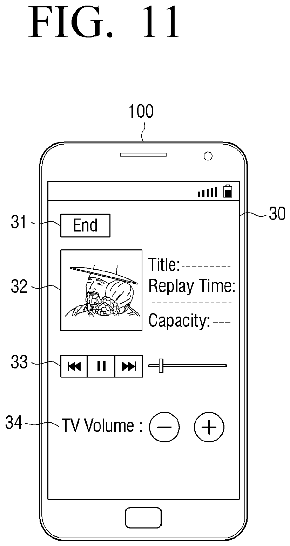

FIG. 10 illustrates the home network system of FIG. 6 without the home theater 320 and the lamp 330, and FIG. 11 illustrates an integrated UI which is displayed on the content playing apparatus 100 if the home network system is configured as shown in FIG. 10.

In the case of the home network system as shown in FIG. 10, if a content sharing command is received from the content playing apparatus 100, the network apparatus 200 transmits information on the smart TV 310, which is a device that is related to the content sharing command, to the content playing apparatus 100. At this time, the network apparatus 200 may transmit information indicating that a sound is output from the smart TV 310 to the content playing apparatus 100.

Accordingly, the content playing apparatus 100 may generate an integrated UI based on the information received from the network apparatus 200, and may display the integrated UI.

For example, as shown in FIG. 11, the integrated UI 30 may include an item 31 for receiving a user command to stop the content sharing command, an item 32 including information on a content item, an item 33 for controlling content playback, and an item 34 for controlling a volume of the smart TV 320.

Accordingly, if a (+) item corresponding to volume up is selected, the network apparatus 200 may transmit a control command to increase the volume of the smart TV 310 to the smart TV, such that the smart TV 310 increases the volume and outputs the sound.

In the exemplary embodiments of FIGS. 6 to 11, the network apparatus 200 may transmit a control command to set a device state of each device to a predetermined state. For example, the network apparatus 200 may transmit a control command to turn on the smart TV 310, change a screen mode to a movie screen mode, and turn off the volume, a control command to turn on the home theater 320, select an external input terminal connected to the smart TV 310, and set a volume of a predetermined level, and a control command to turn off power of the lamp 330 to each device.

Accordingly, the smart TV 310, the home theater 320, and the lamp 330 may perform operations according to the control commands received from the network apparatus 200.

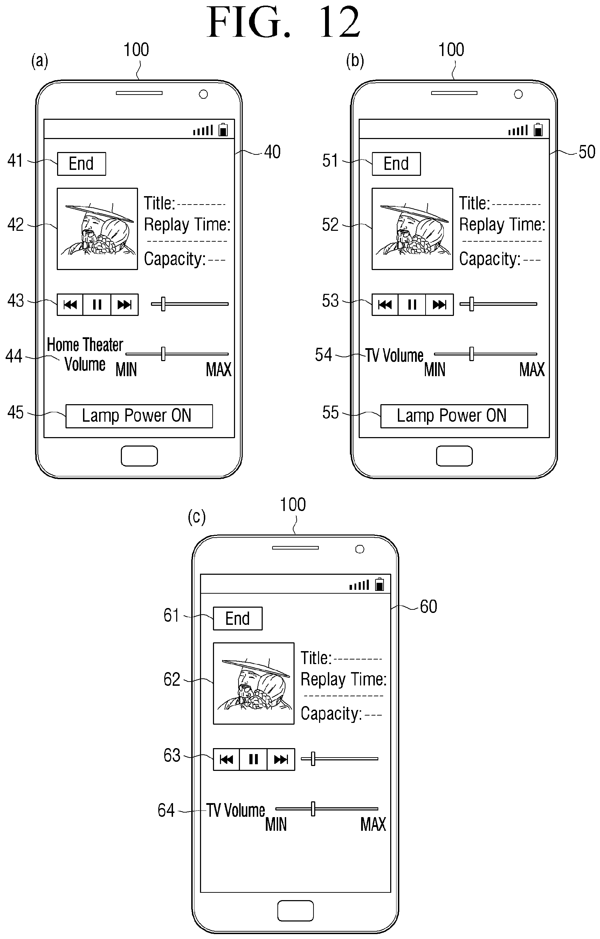

If the device state of each device is changed as described above, the content playing apparatus 100 may generate an integrated UI considering the device state of each device and may display the integrated UI. This will be explained in detail with reference to FIG. 12.

FIG. 12 illustrates an integrated UI which is generated based on a device state of each device. Specifically, views (a), (b), and (c) of FIG. 12 illustrate integrated UIs which are generated based on the integrated UIs shown in FIGS. 7, 9, and 11, reflecting device states of the smart TV 310, the home theater 320, and the lamp 330. Therefore, a redundant explanation of the same elements as those of FIGS. 7, 9, and 11 is omitted.

First, referring to an item 44 for controlling the volume of the home theater 320 in view (a) of FIG. 12, the item 44 displays a currently set volume state of the home theater 320. Also, referring to items 54 and 64 for controlling the volume of the smart TV 310 in views (b) and (c) of FIG. 12, the items 54 and 64 display a currently set volume state of the smart TV 310.

That is, the content playing apparatus 100 determines a current volume state of each device using the information on the volume state of the smart TV 310 and the home theater 320 which is received from the network apparatus 200, generates items 44, 54, and 64 for controlling the volume of each device based on the currently set volume state, and displays the items 44, 54, and 64 on the integrated UI.

Referring to items 45 and 55 for controlling power of the lamp 330 in views (a) and (b) of FIG. 12, the items 45 and 55 for receiving a command to turn on the lamp 330 are displayed.

That is, the content playing apparatus 100 determines a power state of the lamp 330 using the information on the power state of the lamp 330 which is received from the network apparatus 200. Accordingly, if the lamp 330 is turned off, the content playing apparatus 100 generates items 45 and 55 for receiving a user command to turn on the lamp 330 and displays the items 45 and 55 on the integrated UI. Accordingly, if the items 45 and 55 are selected, the content playing apparatus 100 may transmit the user command to turn on the lamp 330 to the network apparatus 200, and the network apparatus 200 may transmit a control command to turn on the lamp 330 to the lamp 330.

Also, if the items 45 and 55 are selected, the content playing apparatus 100 may change the items 45 and 55 to items for receiving a user command to turn off the lamp 330.

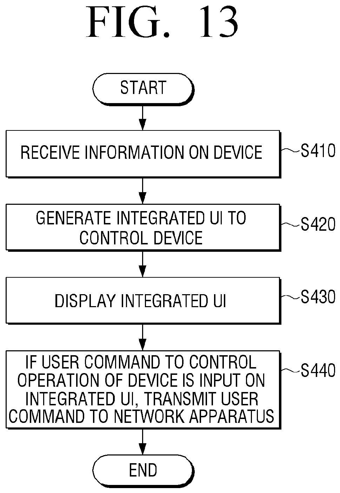

FIG. 13 is a flowchart that illustrates a method for providing a UI of a content playing apparatus according to an exemplary embodiment.

First, if a content sharing command is input, the content playing apparatus communicates with a network apparatus which is connected to at least one device and receives information on the device (S410). The information on the device may include at least one of a type of a device that is related to the content sharing command from among devices in communication with the network apparatus, and a device state of the device. However, this is merely an example and the content playing apparatus may receive a variety of information that can identify the device, such as a name or a serial number of the device.

After that, the content playing apparatus generates an integrated UI to control the device based on the received information (S420), and displays the integrated UI (S430). The integrated UI may include at least one of an item including information on a content item for which the content sharing command is input, an item for controlling a playback state of the content, and an item for controlling a device state of the device.

If a user command to control the operation of the device is input through the integrated UI, the content playing apparatus transmits the user command to the network apparatus (S440).

In operation S420, the content playing apparatus may generate an integrated UI to control a plurality of devices related to the content sharing command based on the information on the device. That is, if a plurality of devices are related to the content sharing command from among the devices existing in a home network system, the content playing apparatus may generate an integrated UI to control the plurality of devices.

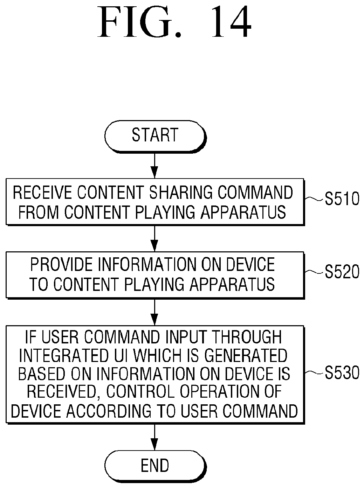

FIG. 14 is a flowchart that illustrates a method for controlling a network apparatus according to an exemplary embodiment.

First, the network apparatus receives a content sharing command from a content playing apparatus from a plurality of devices (S510).

If the content sharing command is received, the network apparatus transmits information on at least one of a plurality of devices to the content playing apparatus (S520).

The information on the device may include at least one of a type of a device that is related to the content sharing command from among devices in communication with the network apparatus, and a device state of the device. However, this is merely an example and the network apparatus may transmit a variety of information that can identify the device, such as a name or a serial number of the device to the content playing apparatus.

If a user command input through an integrated UI which is generated based on the information on the device is received from the content playing apparatus, the network apparatus controls the operation of the device according to the user command (S530). Specifically, the network apparatus may transmit a control command to control the operation of the device according to the received user command to the device. To achieve this, the network apparatus may store a control command corresponding to a user command for each device.

The integrated UI may include at least one of an item including information on a content item for which the content sharing command is input, an item for controlling a playback state of the content item, and an item for controlling a device state of the device.

If the content sharing command is received, the network apparatus may transmit a control command to set at least one device that is related to the content sharing command from among the plurality of devices to a predetermined state to the at least one device, and may transmit information on the predetermined device state to the content playing apparatus.

The method of FIGS. 13 and 14 has been described above with reference to FIGS. 1 to 12.

Also, a non-transitory computer readable medium which stores a program to perform the method for providing the UI and the method for controlling according to an exemplary embodiment in sequence may be provided.

The non-transitory computer readable medium refers to a medium that stores data semi-permanently rather than storing data for a very short time, such as a register, a cache, and a memory, and is readable by an apparatus. Specifically, the above-described various applications or programs may be stored in a non-transitory computer readable medium such as a compact disc (CD), a digital versatile disk (DVD), a hard disk, a Blu-ray disk, a universal serial bus (USB) memory stick, a memory card, and a read only memory (ROM), and may be provided.

Also, although a bus is not illustrated in the block diagram illustrating the content playing apparatus, communication between elements of the content playing apparatus may be achieved by a bus. Also, the content playing apparatus may further include a processor to perform the above-described various operations such as a CPU or a micro processor.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

The foregoing exemplary embodiments and advantages are merely exemplary and are not to be construed as limiting the present inventive concept. The exemplary embodiments can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A content playing apparatus (100) comprising:
an input unit (110) that is configured to receive a content item sharing command from a user;
a communication unit (120) that, when the input unit receives the content item sharing command, is configured to:
transmit the content item sharing command to a network apparatus (200); and
receive (S410) information on at least one device (310-340) of a plurality of devices (310-340) that are connected to the network apparatus (200), wherein the network apparatus (200) has determined the at least one device (310-340) using priority information, wherein the priority information indicates a priority among the plurality of devices (310-340) for outputting the content item corresponding to the content item sharing command;
a graphical user interface, GUI, processor (130) that is configured to generate (S420) an integrated user interface, UI, to control the at least one device (310-340), based on the information on the at least one device (310-340) received by the communication unit (120);
a display (140) that is configured to display (S430) the integrated UI; and
a controller (150) that, when a user command to control an operation of the at least one device (310-340) is input through the integrated UI, is configured to transmit (S440) the user command to the network apparatus (200) such that the network apparatus (200) controls the operation of the at least one device (310-340).

2. The content playing apparatus (100) according to claim 1, wherein the information on the at least one device (310-340) that is received by the communication unit (120) comprises at least one of a type of a device (310-340) that is related to the content item sharing command from among devices (310-340) in communication with the network apparatus (200), and a device state of the device (310-340).

3. The content playing apparatus (100) according to claim 1 or claim 2, wherein the integrated UI comprises at least one of an item comprising information on a content item for which the content item sharing command is input, an item for controlling a playback state of the content item, and an item for controlling a device state of the device (310-340).

4. The content playing apparatus (100) according to any one of claims 1 to 3, wherein the controller (150) is configured to control the GUI processor (130) to generate an integrated UI to control a plurality of devices (310-340) that are related to the content item sharing command, based on the information on the at least one device (310-340) received by the communication unit (120).

5. A network apparatus (200) comprising:
a communication unit (210) that is configured to communicate with a plurality of devices (310-340) and a content playing apparatus (100); and
a controller (220) that, when a content item sharing command is received (S510) from the content playing apparatus (100), is configured to:
determine at least one of the plurality of devices (310-340) among the plurality of devices (310-340) using priority information, wherein the priority information indicates a priority among the plurality of devices (310-340) for outputting the content item corresponding to the content item sharing command; and
provide (S520) information on the at least one of the plurality of devices (310-340) to the content playing apparatus (100);
wherein, when a user command input through an integrated user interface, UI, that is generated based on the information on the at least one of the plurality of devices (310-340) is received from the content playing apparatus (100), the controller (220) is configured to control (S530) an operation of a device (310-340) among the at least one of the plurality of devices (310-340) according to the user command.

6. The network apparatus (200) according to claim 5, wherein the controller (220) is configured to transmit a control command to control the operation of the device (310-340), according to the received user command, to the device (310-340).

7. The network apparatus (200) according to claim 5 or 6, wherein the information on the at least one of the plurality of devices (310-340) comprises at least one of a type of a device (310-340) that is related to the content item sharing command from among devices (310-340) in communication with the communication unit (210), and a device state of the device (310-340).

8. The network apparatus (200) according to any one of claims 5 to 7, wherein the integrated UI comprises at least one of an item comprising information on a content item for which the content item sharing command is input, an item for controlling a playback state of the content item, and an item for controlling a device state of the device (310-340).

9. The network apparatus (200) according to any one of claims 5 to 8, wherein, when the content item sharing command is received, the controller (220) is configured to:
transmit a control command to set at least one device (310-340) that is related to the content sharing command from among the plurality of devices (310-340) to a predetermined state, to the at least one device (310-340); and
transmit information on the predetermined state to the content playing apparatus (100).

10. A method for providing a user interface, UI, of a content playing apparatus (100), the method comprising:
in response to a content item sharing command being input, transmitting the content item sharing command to a network apparatus (200);
receiving (S410) information on at least one device (310-340) of a plurality of devices (310-340) that are connected to the network apparatus (200), wherein the network apparatus (200) has determined the at least one device (310-340) using priority information, wherein the priority information indicates a priority among the plurality of devices (310-340) for outputting the content item corresponding to the content item sharing command;
generating (S420) an integrated UI to control the at least one device (310-340) based on the received information;
displaying (S430) the integrated UI; and
in response to a user command to control an operation of the at least one device (310-340) being input through the integrated UI, transmitting (S440) the user command to the network apparatus (200).

11. The method according to claim 10, wherein the information on the at least one device (310-340) comprises at least one of a type of a device (310-340) that is related to the content item sharing command from among devices (310-340) in communication with the network apparatus, and a device state of the device (310-340).

12. The method according to claim 10 or claim 11, wherein the integrated UI comprises at least one of an item comprising information on a content item for which the content item sharing command is input, an item for controlling a playback state of the content, and an item for controlling a device state of the device (310-340).

13. The method according to any one of claims 10 to 12, wherein the generating comprises generating an integrated UI to control a plurality of devices (310-340) that are related to the content item sharing command, based on the information on the at least one device (310-340).

14. A method for controlling by a network apparatus (200), the method comprising:
receiving (S510) a content item sharing command from a content playing apparatus (100);
in response to receiving the content item sharing command, determining at least one device among a plurality of devices (310-340) using priority information, wherein the priority information indicates a priority among the plurality of devices (310-340) for outputting the content item corresponding to the content item sharing command;
providing (S520) information on the at least one of the plurality of devices (310-340) to the content playing apparatus (100); and
in response to receiving from the content playing apparatus (100) a user command input through an integrated user interface (UI) that is generated based on the information on the at least one of the plurality of devices (310-340), controlling (S530) an operation of a device (310-340) among the at least one of the plurality of devices (310-340) according to the user command.

15. The method according to claim 14, wherein the controlling comprises transmitting a control command to control the operation of the device (310-340) according to the received user command, to the device (310-340).

## Patentansprüche

1. Eine Inhaltswiedergabevorrichtung (100), die Folgendes umfasst:
eine Eingabeeinheit (110), die eingerichtet ist, um einen Befehl zum Teilen eines Inhaltselements von einem Benutzer zu empfangen;
eine Kommunikationseinheit (120), die für folgende Zwecke eingerichtet ist, wenn die Eingabeeinheit den Befehl zum Teilen eines Inhaltselements empfängt:
Übertragen des Befehls zum Teilen eines Inhaltselements an eine Netzwerkvorrichtung (200); und
Empfangen (S410) von Informationen zu mindestens einer Vorrichtung (310-340) aus einer Vielzahl von Vorrichtungen (310-340), die mit der Netzwerkvorrichtung (200) verbunden sind, wobei die Netzwerkvorrichtung (200) die mindestens eine Vorrichtung (310-340) anhand von Prioritätsinformationen bestimmt, wobei die Prioritätsinformationen eine Priorität einer Vorrichtung unter der Vielzahl von Vorrichtungen (310-340) für die Ausgabe des Inhaltselements angeben, das dem Befehl zum Teilen eines Inhaltselements entspricht;
eine Verarbeitungseinheit einer grafischen Benutzeroberfläche (Graphical User Interface, GUI) (130), die eingerichtet ist, um zwecks Steuerung der mindestens einen Vorrichtung (310-340) eine integrierte Benutzeroberfläche (User Interface, UI) basierend auf den durch die Kommunikationseinheit (120) empfangenen Informationen zu der mindestens einen Vorrichtung (310-340) zu erzeugen (S420);
eine Anzeige (140), die eingerichtet ist, um die integrierte UI anzuzeigen (S430); und
eine Steuereinheit (150), die eingerichtet ist, um einen Benutzerbefehl an die Netzwerkvorrichtung (200) zu übertragen (S440), wenn der Benutzerbefehl zur Steuerung eines Betriebs der mindestens einen Vorrichtung (310-340) über die integrierte UI eingegeben wird, sodass die Netzwerkvorrichtung (200) den Betrieb der mindestens einen Vorrichtung (310-340) steuert.

2. Die Inhaltswiedergabevorrichtung (100) nach Anspruch 1, wobei die durch die Kommunikationseinheit (120) empfangenen Informationen zu der mindestens einen Vorrichtung (310-340) zumindest einen Typ einer Vorrichtung (310-340) im Zusammenhang mit dem Befehl zum Teilen eines Inhaltselements unter Vorrichtungen (310-340) in Verbindung mit der Netzwerkvorrichtung (200) und/oder einen Vorrichtungszustand der Vorrichtung (310-340) umfassen.

3. Die Inhaltswiedergabevorrichtung (100) nach Anspruch 1 oder Anspruch 2, wobei die integrierte UI zumindest ein Element mit Informationen zu einem Inhaltselement, für das der Befehl zum Teilen eines Inhaltselements eingegeben wurde, ein Element zur Steuerung eines Wiedergabezustands des Inhaltselements und/oder ein Element zur Steuerung eines Vorrichtungszustands der Vorrichtung (310-340) umfasst.

4. Die Inhaltswiedergabevorrichtung (100) nach einem der Ansprüche 1 bis 3, wobei die Steuereinheit (150) eingerichtet ist, um die GUI-Verarbeitungseinheit (130) zu steuern, damit diese basierend auf den durch die Kommunikationseinheit (120) empfangenen Informationen zu der mindestens einen Vorrichtung (310-340) eine integrierte UI erzeugt, um eine Vielzahl von Vorrichtungen (310-340) im Zusammenhang mit dem Befehl zum Teilen eines Inhaltselements zu steuern.

5. Eine Netzwerkvorrichtung (200), die Folgendes umfasst:
eine Kommunikationseinheit (210), die eingerichtet ist, um mit einer Vielzahl von Vorrichtungen (310-340) und einer Inhaltswiedergabevorrichtung (100) zu kommunizieren; und
eine Steuereinheit (220), die infolge des Empfangs (S510) eines Befehls zum Teilen eines Inhaltselements von der Inhaltswiedergabevorrichtung (100) für folgende Zwecke eingerichtet ist:
Bestimmen mindestens einer Vorrichtung aus der Vielzahl von Vorrichtungen (310-340) unter der Vielzahl von Vorrichtungen (310-340) anhand von Prioritätsinformationen, wobei die Prioritätsinformationen eine Priorität einer Vorrichtung unter der Vielzahl von Vorrichtungen (310-340) für die Ausgabe des Inhaltselements angeben, das dem Befehl zum Teilen eines Inhaltselements entspricht; und
Bereitstellen (S520) von Informationen zu der mindestens einen Vorrichtung aus der Vielzahl von Vorrichtungen (310-340) an die Inhaltswiedergabevorrichtung (100);
wobei die Steuereinheit (220) eingerichtet ist, um einen Betrieb einer Vorrichtung (310-340) unter der mindestens einen Vorrichtung aus der Vielzahl von Vorrichtungen (310-340) entsprechend einem Benutzerbefehl zu steuern (S530), wenn der Benutzerbefehl, der über eine basierend auf den Informationen zu der mindestens einen Vorrichtung aus der Vielzahl von Vorrichtungen (310-340) erzeugte integrierte Benutzeroberfläche (User Interface, UI) eingegeben wurde, von der Inhaltswiedergabevorrichtung (100) empfangen wird.

6. Die Netzwerkvorrichtung (200) nach Anspruch 5, wobei die Steuereinheit (220) eingerichtet ist, um einen Steuerbefehl zur Steuerung des Betriebs der Vorrichtung (310-340) entsprechend dem empfangenen Benutzerbefehl an die Vorrichtung (310-340) zu übertragen.

7. Die Netzwerkvorrichtung (200) nach Anspruch 5 oder 6, wobei die Informationen zu der mindestens einen Vorrichtung aus der Vielzahl von Vorrichtungen (310-340) zumindest einen Typ einer Vorrichtung (310-340) im Zusammenhang mit dem Befehl zum Teilen eines Inhaltselements unter Vorrichtungen (310-340) in Verbindung mit der Kommunikationseinheit (210) und/oder einen Vorrichtungszustand der Vorrichtung (310-340) umfassen.

8. Die Netzwerkvorrichtung (200) nach einem der Ansprüche 5 bis 7, wobei die integrierte UI zumindest ein Element mit Informationen zu einem Inhaltselement, für das der Befehl zum Teilen eines Inhaltselements eingegeben wurde, ein Element zur Steuerung eines Wiedergabezustands des Inhaltselements und/oder ein Element zur Steuerung eines Vorrichtungszustands der Vorrichtung (310-340) umfasst.

9. Die Netzwerkvorrichtung (200) nach einem der Ansprüche 5 bis 8, wobei die Steuereinheit (220) infolge des Empfangs des Befehls zum Teilen eines Inhaltselements für folgende Zwecke eingerichtet ist:
Übertragen eines Steuerbefehls zur Einstellung mindestens einer Vorrichtung (310-340) im Zusammenhang mit dem Befehl zum Teilen eines Inhaltselements unter der Vielzahl von Vorrichtungen (310-340) auf einen zuvor bestimmten Zustand an die mindestens eine Vorrichtung (310-340); und
Übertragen von Informationen zu dem zuvor bestimmten Zustand an die Inhaltswiedergabevorrichtung (100).

10. Ein Verfahren zur Bereitstellung einer Benutzeroberfläche (User Interface, UI) einer Inhaltswiedergabevorrichtung (100), wobei das Verfahren Folgendes umfasst:
Übertragen eines Befehls zum Teilen eines Inhaltselements an eine Netzwerkvorrichtung (200) infolge der Eingabe des Befehls zum Teilen eines Inhaltselements;
Empfangen (S410) von Informationen zu mindestens einer Vorrichtung (310-340) aus einer Vielzahl von Vorrichtungen (310-340), die mit der Netzwerkvorrichtung (200) verbunden sind, wobei die Netzwerkvorrichtung (200) die mindestens eine Vorrichtung (310-340) anhand von Prioritätsinformationen bestimmt, wobei die Prioritätsinformationen eine Priorität einer Vorrichtung unter der Vielzahl von Vorrichtungen (310-340) für die Ausgabe des Inhaltselements angeben, das dem Befehl zum Teilen eines Inhaltselements entspricht;
Erzeugen (S420) einer integrierten UI basierend auf den empfangenen Informationen zur Steuerung der mindestens einen Vorrichtung (310-340);
Anzeigen (S430) der integrierten UI; und
Übertragen (S440) eines Benutzerbefehls an die Netzwerkvorrichtung (200) als Antwort auf den über die integrierte UI eingegebenen Benutzerbefehl zur Steuerung eines Betriebs der mindestens einen Vorrichtung (310-340).

11. Das Verfahren nach Anspruch 10, wobei die Informationen zu der mindestens einen Vorrichtung (310-340) zumindest einen Typ einer Vorrichtung (310-340) im Zusammenhang mit dem Befehl zum Teilen eines Inhaltselements unter Vorrichtungen (310-340) in Verbindung mit der Netzwerkvorrichtung und/oder einen Vorrichtungszustand der Vorrichtung (310-340) umfassen.

12. Das Verfahren nach Anspruch 10 oder Anspruch 11, wobei die integrierte UI zumindest ein Element mit Informationen zu einem Inhaltselement, für das der Befehl zum Teilen eines Inhaltselements eingegeben wurde, ein Element zur Steuerung eines Wiedergabezustands des Inhalts und/oder ein Element zur Steuerung eines Vorrichtungszustands der Vorrichtung (310-340) umfasst.

13. Das Verfahren nach einem der Ansprüche 10 bis 12, wobei die Erzeugung umfasst, dass eine integrierte UI basierend auf den Informationen zu der mindestens einen Vorrichtung (310-340) erzeugt wird, um eine Vielzahl von Vorrichtungen (310-340) im Zusammenhang mit dem Befehl zum Teilen eines Inhaltselements zu steuern.

14. Ein Verfahren zur Steuerung durch eine Netzwerkvorrichtung (200), wobei das Verfahren Folgendes umfasst:
Empfangen (S510) eines Befehls zum Teilen eines Inhaltselements von einer Inhaltswiedergabevorrichtung (100);
Bestimmen mindestens einer Vorrichtung unter der Vielzahl von Vorrichtungen (310-340) anhand von Prioritätsinformationen, wobei dies infolge des Empfangs des Befehls zum Teilen eines Inhaltselements erfolgt, wobei die Prioritätsinformationen eine Priorität einer Vorrichtung unter der Vielzahl von Vorrichtungen (310-340) für die Ausgabe des Inhaltselements angeben, das dem Befehl zum Teilen eines Inhaltselements entspricht;
Bereitstellen (S520) von Informationen zu der mindestens einen Vorrichtung aus der Vielzahl von Vorrichtungen (310-340) an die Inhaltswiedergabevorrichtung (100); und
Steuern (S530) eines Betriebs einer Vorrichtung (310-340) unter der mindestens einen Vorrichtung aus der Vielzahl von Vorrichtungen (310-340) entsprechend dem Benutzerbefehl, nachdem ein Benutzerbefehl, der über eine basierend auf den Informationen zu der mindestens einen Vorrichtung aus der Vielzahl von Vorrichtungen (310-340) erzeugte integrierte Benutzeroberfläche (User Interface, UI) eingegeben wurde, von der Inhaltswiedergabevorrichtung (100) empfangen wird.

15. Das Verfahren nach Anspruch 14, wobei die Steuerung umfasst, dass ein Steuerbefehl zur Steuerung des Betriebs der Vorrichtung (310-340) entsprechend dem empfangenen Benutzerbefehl an die Vorrichtung (310-340) übertragen wird.

## Revendications

1. Un appareil de lecture de contenus (100) comprenant :
une unité d'entrée (110) qui est configurée de façon à recevoir une commande de partage d'éléments de contenu à partir d'un utilisateur,
une unité de communication (120) qui, lorsque l'unité d'entrée reçoit la commande de partage d'éléments de contenu, est configurée de façon à :
transmettre la commande de partage d'éléments de contenu à un appareil de réseau (200), et
recevoir (S410) des informations relatives à au moins un dispositif (310-340) d'une pluralité de dispositifs (310-340) qui sont connectés à l'appareil de réseau (200), où l'appareil de réseau (200) a déterminé le au moins un dispositif (310-340) au moyen d'informations de priorité, où les informations de priorité indiquent une priorité parmi la pluralité de dispositifs (310-340) de production en sortie de l'élément de contenu correspondant à la commande de partage d'éléments de contenu,
un processeur d'interface utilisateur graphique, GUI, (130) qui est configuré de façon à générer (S420) une interface utilisateur, UI, intégrée destinée à la commande du au moins un dispositif (310-340), en fonction des informations relatives au au moins un dispositif (310-340) reçues par l'unité de communication (120),
un dispositif d'affichage (140) qui est configuré de façon à afficher (S430) l'UI intégrée, et
un dispositif de commande (150) qui, lorsqu'une commande d'utilisateur destinée à la commande d'un fonctionnement du au moins un dispositif (310-340) est entrée par l'intermédiaire de l'UI intégrée, est configuré de façon à transmettre (S440) la commande d'utilisateur à l'appareil de réseau (200) de sorte que l'appareil de réseau (200) commande le fonctionnement du au moins un dispositif (310-340).

2. L'appareil de lecture de contenus (100) selon la Revendication 1, où les informations relatives au au moins un dispositif (310-340) qui sont reçues par l'unité de communication (120) comprennent au moins un élément parmi un type d'un dispositif (310-340) qui est relié à la commande de partage d'éléments de contenu parmi des dispositifs (310-340) en communication avec l'appareil de réseau (200), et un état de dispositif du dispositif (310-340).

3. L'appareil de lecture de contenus (100) selon la Revendication 1 ou 2, où l'UI intégrée comprend au moins un élément parmi un élément comprenant des informations relatives à un élément de contenu pour lequel la commande de partage d'éléments de contenu est entrée, un élément destiné à la commande d'un état de lecture de l'élément de contenu et un élément destiné à la commande d'un état de dispositif du dispositif (310-340).

4. L'appareil de lecture de contenus (100) selon l'une quelconque des Revendications 1 à 3, où le dispositif de commande (150) est configuré de façon à commander le processeur de GUI (130) de façon à générer une UI intégrée destinée à la commande d'une pluralité de dispositifs (310-340) qui sont reliés à la commande de partage d'éléments de contenu, en fonction des informations relatives au au moins un dispositif (310-340) reçues par l'unité de communication (120).

5. Un appareil de réseau (200) comprenant :
une unité de communication (210) qui est configurée de façon à communiquer avec une pluralité de dispositifs (310-340) et un appareil de lecture de contenus (100), et
un dispositif de commande (220) qui, lorsqu'une commande de partage d'éléments de contenu est reçue (S510) à partir de l'appareil de lecture de contenus (100), est configuré de façon à :
déterminer au moins un dispositif de la pluralité de dispositifs (310-340) parmi la pluralité de dispositifs (310-340) au moyen d'informations de priorité, où les informations de priorité indiquent une priorité parmi la pluralité de dispositifs (310-340) de production en sortie de l'élément de contenu correspondant à la commande de partage d'éléments de contenu, et
fournir (S520) des informations relatives au au moins un dispositif de la pluralité de dispositifs (310-340) à l'appareil de lecture de contenus (100),
où, lorsqu'une commande d'utilisateur entrée par l'intermédiaire d'une interface utilisateur, UI, intégrée qui est générée en fonction des informations relatives au au moins un dispositif de la pluralité de dispositifs (310-340) est reçue à partir de l'appareil de lecture de contenus (100), le dispositif de commande (220) est configuré de façon à commander (S530) un fonctionnement d'un dispositif (310-340) parmi le au moins un dispositif de la pluralité de dispositifs (310-340) en fonction de la commande d'utilisateur.

6. L'appareil de réseau (200) selon la Revendication 5, où le dispositif de commande (220) est configuré de façon à transmettre une instruction de commande destinée à la commande du fonctionnement du dispositif (310-340), en fonction de la commande d'utilisateur reçue, au dispositif (310-340).

7. L'appareil de réseau (200) selon la Revendication 5 ou 6, où les informations relatives au au moins un dispositif de la pluralité de dispositifs (310-340) comprennent au moins un élément parmi un type d'un dispositif (310-340) qui est relié à la commande de partage d'éléments de contenu parmi des dispositifs (310-340) en communication avec l'unité de communication (210) et un état de dispositif du dispositif (310-340).

8. L'appareil de réseau (200) selon l'une quelconque des Revendications 5 à 7, où l'UI intégrée comprend au moins un élément parmi un élément comprenant des informations relatives à un élément de contenu pour lequel la commande de partage d'éléments de contenu est entrée, un élément destiné à la commande d'un état de lecture de l'élément de contenu et un élément destiné à la commande d'un état de dispositif du dispositif (310-340).

9. L'appareil de réseau (200) selon l'une quelconque des Revendications 5 à 8, où, lorsque la commande de partage d'éléments de contenu est reçue, le dispositif de commande (220) est configuré de façon à :
transmettre une instruction de commande destinée au réglage d'au moins un dispositif (310-340) qui est relié à la commande de partage de contenus parmi la pluralité de dispositifs (310-340) sur un état prédéterminé, au au moins un dispositif (310-340), et
transmettre des informations relatives à l'état prédéterminé à l'appareil de lecture de contenus (100).

10. Un procédé de fourniture d'une interface utilisateur, UI, d'un appareil de lecture de contenus (100), le procédé comprenant :
en réponse à l'entrée d'une commande de partage d'éléments de contenu, la transmission de la commande de partage d'éléments de contenu à un appareil de réseau (200),
la réception (S410) d'informations relatives à au moins un dispositif (310-340) d'une pluralité de dispositifs (310-340) qui sont connectés à l'appareil de réseau (200), où l'appareil de réseau (200) a déterminé le au moins un dispositif (310-340) au moyen d'informations de priorité, où les informations de priorité indiquent une priorité parmi la pluralité de dispositifs (310-340) de production en sortie de l'élément de contenu correspondant à la commande de partage d'éléments de contenu,
la génération (S420) d'une UI intégrée destinée à la commande du au moins un dispositif (310-340) en fonction des informations reçues,
l'affichage (S430) de l'UI intégrée, et
en réponse à l'entrée d'une commande d'utilisateur destinée à la commande d'un fonctionnement du au moins un dispositif (310-340) par l'intermédiaire de l'UI intégrée, la transmission (S440) de la commande d'utilisateur à l'appareil de réseau (200).

11. Le procédé selon la Revendication 10, où les informations relatives au au moins un dispositif (310-340) comprennent au moins un élément parmi un type d'un dispositif (310-340) qui est relié à la commande de partage d'éléments de contenu parmi des dispositifs (310-340) en communication avec l'appareil de réseau et un état de dispositif du dispositif (310-340).

12. Le procédé selon la Revendication 10 ou 11, où l'UI intégrée comprend au moins un élément parmi un élément comprenant des informations relatives à un élément de contenu pour lequel la commande de partage d'éléments de contenu est entrée, un élément destiné à la commande d'un état de lecture du contenu et un élément destiné à la commande d'un état de dispositif du dispositif (310-340).

13. Le procédé selon l'une quelconque des Revendications 10 à 12, où la génération comprend la génération d'une UI intégrée destinée à la commande d'une pluralité de dispositifs (310-340) qui sont reliés à la commande de partage d'éléments de contenu, en fonction des informations relatives au au moins un dispositif (310-340).

14. Un procédé de commande par un appareil de réseau (200), le procédé comprenant :
la réception (S510) d'une commande de partage d'éléments de contenu à partir d'un appareil de lecture de contenus (100),
en réponse à la réception de la commande de partage d'éléments de contenu, la détermination d'au moins un dispositif parmi une pluralité de dispositifs (310-340) au moyen d'informations de priorité, où les informations de priorité indiquent une priorité parmi la pluralité de dispositifs (310-340) de production en sortie de l'élément de contenu correspondant à la commande de partage d'éléments de contenu,
la fourniture (S520) d'informations relatives au au moins un dispositif de la pluralité de dispositifs (310-340) à l'appareil de lecture de contenus (100), et
en réponse à la réception à partir de l'appareil de lecture de contenus (100) d'une commande d'utilisateur entrée par l'intermédiaire d'une interface utilisateur (UI) intégrée qui est générée en fonction des informations relatives au au moins un dispositif de la pluralité de dispositifs (310-340), la commande (S530) d'un fonctionnement d'un dispositif (310-340) parmi le au moins un dispositif de la pluralité de dispositifs (310-340) en fonction de la commande d'utilisateur.

15. Le procédé selon la Revendication 14, où la commande comprend la transmission d'une instruction de commande destinée à la commande du fonctionnement du dispositif (310-340) en fonction de la commande d'utilisateur reçue au dispositif (310-340).
